Europäisches Patentamt

**European Patent Office**

Office européen des brevets

(11) Numéro de publication: **0 301 978**
**A1**

(12)

# DEMANDE DE BREVET EUROPEEN

(21) Numéro de dépôt: **88420251.6**

(22) Date de dépôt: **13.07.88**

(51) Int. Cl.⁴: **G 07 F 7/06**

(30) Priorité: **17.07.87 FR 8710421**

(43) Date de publication de la demande:
**01.02.89 Bulletin 89/05**

(84) Etats contractants désignés:
**AT BE CH DE ES FR GB GR IT LI LU NL SE**

(71) Demandeur: **MULLER SARL**
**2 rue Maurice Ravel**
**F-69410 Champagne au Mont D'Or (FR)**

**Muller, Alfred**
**Le Care Saint Bernard**
**F-01600 Trevoux (FR)**

(72) Inventeur: **Muller, Alfred**
**Le Care, Saint Bernard**
**F-01600 Trevoux (FR)**

(74) Mandataire: **Laurent, Michel et al**
**Cabinet LAURENT et GUERRE 20, rue Louis Chirpaz B.P. 32**
**F-69131 Ecully Cédex (FR)**

(54) **Appareil pour récupérer un objet, notamment un gobelet en matière plastique, contre délivrance d'une contre-valeur, notamment monétaire.**

(57) La présente invention concerne un appareil pour récupérer un objet, contre délivrance d'un support de contre-valeur, par exemple une consigne. Selon l'invention, l'appareil comporte un sas (5), un dispositif (6) de reconnaissance optique de la forme de l'objet, un moyen (2a) d'évacuation de l'objet reconnu conforme, un dispositif (10) de délivrance de la contre-valeur, un dispositif (10) de destruction de l'objet reconnu conforme, et un récipient (11) pour collecter les objets introduits dans l'appareil.

L'invention s'applique en particulier à la récupération de gobelets en matière plastique.

Fig. 1 a

## Description

## APPAREIL POUR RECUPERER UN OBJET, NOTAMMENT UN GOBELET EN MATIERE PLASTIQUE, CONTRE DELIVRANCE D'UNE CONTRE-VALEUR, NOTAMMENT MONETAIRE

La présente invention concerne un appareil ou matériel permettant de récupérer, éventuellement avec destruction, un objet, par exemple du type emballage perdu, contre délivrance d'un support d'une contre-valeur, qu'il s'agisse d'une ou plusieurs pièces de monnaie représentant une consigne, ou d'un ticket servant d'avoir pour un achat ultérieur.

L'invention sera explicitée par référence à des gobelets plastiques, tels qu'utilisés dans divers distributeurs automatiques de boissons chaudes ou froides. Mais il doit être entendu que l'invention peut recevoir application dans d'autres domaines techniques, dès lors que l'objet traité présente une forme de révolution autour d'un axe, ou est creux, notamment avec une paroi souple.

S'agissant des gobelets plastiques, on sait l'atteinte à l'environnement qu'ils représentent, en raison de la négligence des consommateurs, omettant de les jeter dans une poubelle, après consommation de leur boisson chaude ou froide obtenue d'un distributeur automatique.

Un palliatif à cette situation consiste à majorer le prix de la boisson vendue par le distributeur d'une certaine somme, assimilable à une consigne, et à disposer auprès du même distributeur un appareil permettant par voie automatique de récupérer les gobelets usagés, contre délivrance de la même consigne, par exemple sous la forme d'une ou plusieurs pièces de monnaie.

Ainsi, selon la demande de brevet FR-A-2580418, on a déjà proposé un tel appareil comprenant :

- un sas avec porte d'accès verrouillable, pour l'introduction du gobelet à l'envers par l'utilisateur ;

- un dispositif de reconnaissance de la conformité du gobelet, par lecture photo-électrique d'un marquage circonférenciel sur la partie inférieure (à l'endroit) du gobelet ;

- un dispositif de destruction par écrasement du gobelet introduit, une fois la porte d'accès verrouillée ;

- un moyen d'évacuation de l'objet reconnu conforme, identique au dispositif de destruction, dans la mesure où ce dernier consiste en un disque rotatif, écrasant le gobelet contre une couronne, tout en le transportant vers un sac-poubelle ;

- un dispositif de délivrance de la contre-valeur, en l'occurrence rendant la monnaie correspondant à la consigne ;

- un récipient, à savoir un sac-poubelle, pour collecter les objets introduits dans l'appareil, qu'il s'agisse des gobelets écrasés et donc détruits, ou d'autres objets introduits frauduleusement.

L'appareil venant d'être décrit souffre de divers inconvénients.

Tout d'abord, son utilisation suppose que les gobelets utilisés soient marqués, et donc que le fabricant desdits gobelets coopère avec l'exploitant de l'appareil de récupération, pour convenir d'un marquage approprié, répétitif, et identifiable par le dispositif de reconnaissance de l'appareil de récupération.

Ensuite, la lecture optique du marquage en question, par des moyens simples, par exemple avec une cellule photo-électrique, ne s'est pas révélée à l'expérience particulièrement fiable.

Pour terminer, mais à titre accessoire, le dispositif de destruction par écrasement ne permet pas de détruire définitivement, en particulier de casser complétement, les gobelets usagés introduits dans l'appareil.

De manière générale, l'invention s'intéresse aux objets tels que définis précédemment, présentant par conception ou construction une zone annulaire de référence, située entre les deux extrémités selon l'axe dudit objet, laquelle présente un facteur de réflexion différent de celui du corps dudit objet.

De manière particulière, l'invention s'intéresse à des gobelets plastiques, répondant à la définition générale précédente, en ce sens que la zone annulaire de référence correspond à un rebord ou bourrelet annulaire supérieur, retourné vers l'extérieur du gobelet, et relativement brillant par rapport au corps d'aspect mat.

La présente invention a pour objet un appareil du type précité, permettant de manière fiable et répétitive de reconnaître des objets conformes, sans pour autant apporter préalablement un quelconque marquage sur les objets neufs, ledit appareil demeurant de conception technique simple.

A titre accessoire, l'invention concerne, dans le cadre d'un appareil tel que défini précédemment, un dispositif de destruction de chaque gobelet usagé reconnu conforme, totalement efficace, c'est-à-dire détruisant en plusieurs morceaux un tel gobelet, en vue d'empêcher tout nouvel usage de ce dernier, notamment frauduleux par réintroduction dans le même appareil pour obtenir une nouvelle consigne.

Conformément à l'invention, le dispositif de reconnaissance géométrique comprend :

a) un support amovible pour arrêter l'objet (1) par l'une de ses extrémités selon l'axe, par exemple son fond ;

b) un système optique comportant, d'une part une source lumineuse pour l'émission d'un faisceau lumineux incident, sur la zone annulaire de référence, et d'autre part une cellule photo-électrique pour la réception du faisceau lumineux réfléchi par la même zone annulaire de référence, les faisceaux incident et réfléchi étant réglés en hauteur pour déterminer ensemble un plan de réflexion situé à une distance prédéterminée par rapport audit support, sensiblement égale à la hauteur de la zone annulaire par rapport à l'extrémité de l'objet arrêtée par le support ;

c) des moyens de controle associés à la cellule photo-électrique, délivrant un signal de sortie, au-delà d'un seuil d'intensité du faisceau lumineux réfléchi, correspondant à la réflexion du faisceau incident sur la zone annulaire de référence.

Ainsi, de manière générale un appareil conforme à la présente invention est à même de reconnaître telle ou telle caractéristique géométrique préexistante de l'objet traité, ayant une forme de révolution autour de l'axe dudit objet. Par exemple, si l'on considère un gobelet en matière plastique, le faisceau lumineux réfléchi n'aura pas la même intensité selon qu'il provient du corps tronconique (en général mat) ou du rebord annulaire (en général brillant). En ajustant la sensibilité des moyens de controle associés à la cellule photo-électrique de détection, il est donc possible de reconnaitre un gobelet conforme, par la présence du rebord annulaire à une distance prédéterminée par rapport au support, correspondant à la hauteur du gobelet.

Accessoirement, et pour détruire un gobelet reconnu conforme, un dispositif de destruction selon l'invention comprend :

- une plaque comportant un orifice de découpe adapté à la section du gobelet (ou autre objet creux), avec éventuellement un moyen de calage dudit objet dans ledit orifice :

- une lame de découpe montée perpendiculairement sur un axe de rotation, lequel est situé à distance de l'orifice de découpe ; la lame s'étend parallèlement à la plaque, et présente deux bords coupants, l'un convexe et l'autre concave, divergeant l'un par rapport à l'autre, à partir d'une pointe de perforation de l'objet creux, dans le sens inverse à la rotation de la lame.

Un dispositif de destruction tel que précédemment décrit se révèle particulièrement efficace pour sectionner un gobelet usagé en deux parties séparées, ce qui rend définitivement le gobelet usagé impropre à tout nouvel usage, y compris frauduleux, par ré-introduction dans un appareil selon l'invention.

La présente invention est maintenant décrite par référence aux dessins annexés, dans lesquels :

- la figure 1a représente, de manière schématique, une vue en coupe verticale d'un appareil conforme à la présente invention ; la figure 1b représente une vue de face du même appareil ;

- la figure 2 représente, toujours de manière schématique, une vue en coupe verticale de l'ensemble constitué par le sas (sans sa porte d'accès) d'introduction d'un gobelet usagé d'une part, et de la goulotte d'évacuation du même gobelet d'autre part ;

- les figures 3a et 3b représentent, de manière schématique, deux phases de fonctionnement du sas et du moyen d'arrêt du gobelet, respectivement au moment de l'introduction de ce dernier dans le sas, et au moment de l'escamotage de la trappe du sas, et de l'arrêt du même gobelet dans la goulotte d'évacuation ;

- les figures 4a à 4c représentent, de manière schématique, du côté opposé à la représentation des figures 3a et 3b, le mode d'actionnement de la trappe escamotable du sas d'introduction des gobelets, en liaison avec le moyen d'arrêt de ces derniers dans la goulotte d'évacuation ;

- la figure 5 représente une vue de face, en position de repos, d'un dispositif de destruction d'un gobelet conforme à la présente invention ;

- la figure 6 représente,de manière schématique, que,une vue de côté du dispositif représenté à la figure 5 ;

- les figures 7a à 7c représentent différentes phases de fonctionnement du dispositif de destruction représenté aux figures 5 et 6 ;

- la figure 8 représente , de manière schématique, une vue en coupe verticale d'un autre appareil conforme à l'invention ;

- les figures 9a et 9b représentent de manière schématique, pour un appareil conforme à la présente invention, la rampe d'évacuation d'un gobelet, respectivement dans la position d'arrêt de ce dernier par le dispositif de destruction au repos, et dans la position escamotée, permettant d'évacuer vers le sac-poubelle tout gobelet reconnu non conforme.

- la figure 10, en correspondance avec la figure 3b, détaille les principaux composants du dispositif de reconnaissance géométrique selon l'invention.

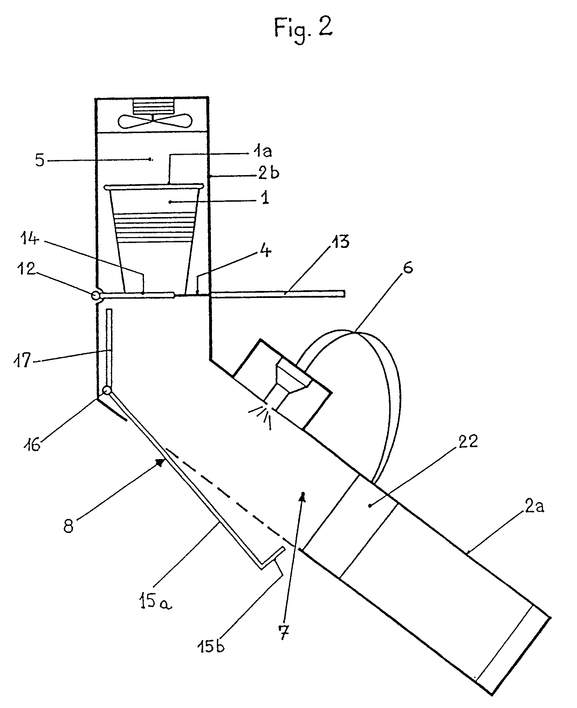

Un appareil selon l'invention permet de traiter, notamment reconnaitre et détruire des gobelets ayant la forme de celui représenté au haut de la figure 2. Un tel gobelet (1), en matière plastique mince, comporte un corps tronconique d'aspect mat, et un rebord supérieur annulaire (1a), tourné vers l'extérieur, et émergeant par rapport à la paroi tronconique à une hauteur prédéterminée, et sensiblement constante d'un gobelet à l'autre.

Un appareil selon l'invention, ayant de manière générale la forme d'une armoire, pouvant être accolé à un appareil distributeur automatique de boissons chaudes ou froides, comporte les composants essentiels suivants :

1/ un conduit (2) de circulation des gobelets usagés, comportant deux branches faisant entre elles un angle obtus, l'une inclinée vers le bas (2a), et l'autre verticale (2b) ; la section de ce conduit (2) est approximativement carrée, et est un peu plus grande que la plus grande section transversale des gobelets (1) ; une porte (3), déplaçable verticalement dans des glissières appropriées sur l'un des côtés de l'appareil, et une trappe escamotable (4) forment avec la branche (2b) du conduit (2) un sas (5) pour l'introduction d'un gobelet usagé par l'utilisateur.

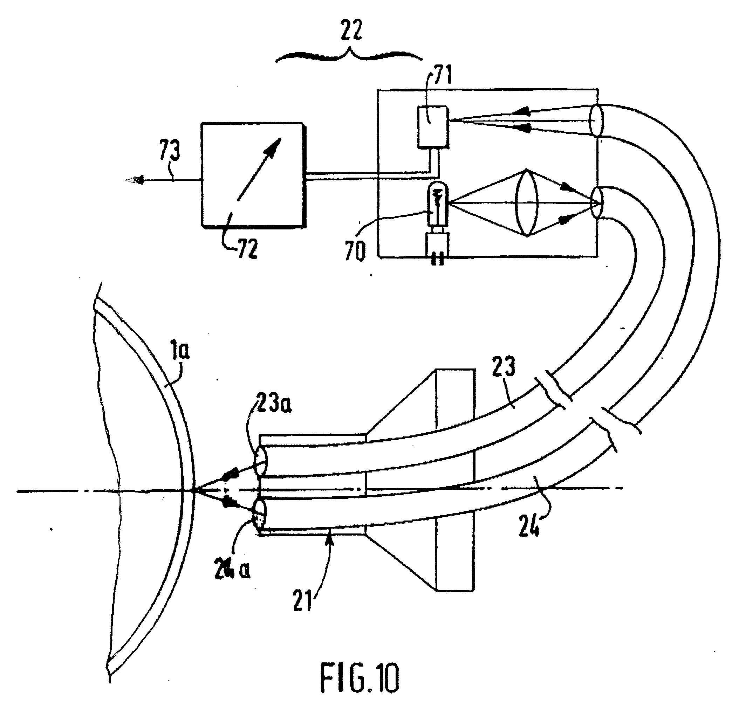

2/ un capteur (6) appartenant au dispositif de reconnaissance de la conformité du gobelet usagé, lequel est explicité à la figure 10.

3/ un moyen (7) d'évacuation du gobelet reconnu conforme, constitué par la branche inclinée (2a) du conduit (2), formant goulotte ou rampe de circulation vers le bas.

4/ un moyen (8) escamotable ou amovible, d'arrêt du gobelet glissant dans la goulotte d'évacuation (2a) vers le bas, formant support pour la partie inférieure dudit gobelet.

5/ un dispositif de destruction (9) d'un gobelet reconnu conforme.

6/ un dispositif (10) pour rendre des pièces de monnaie correspondant à une consigne.

7/ un récipient (11), du type sac-poubelle, pour collecter les objets introduits dans l'appareil, et en particulier les gobelets détruits par l'appareil (9).

La trappe (4) consiste en un volet de forme carrée, mobile en rotation à l'intérieur du conduit (2b),fixé selon l'un de ses côtés sur un axe (12) tourillonné sur les parois du conduit (2b) ou encore du sas (5). L'axe (12) est solidaire, à l'extérieur du conduit (2b), de part et d'autre du sas (5), respectivement d'un levier d'actionnement (13) relativement long, et d'un bras (14) de renvoi relativement court vers le moyen d'arrêt dont il sera question ci-après ; le levier (13) et le bras (14) sont approximativement disposés dans le même plan que le volet (4).

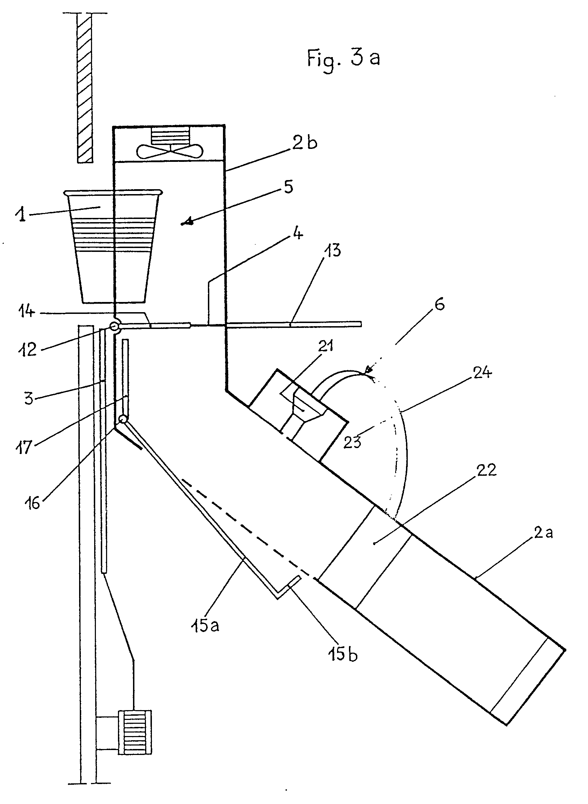

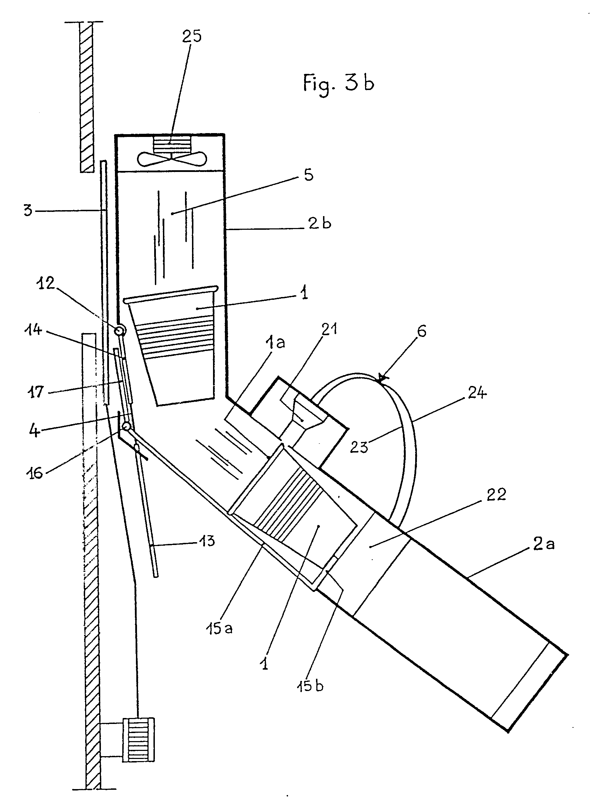

Le moyen d'arrêt (8),disposé au-dessous de la trape (4) est escamotable par rapport à la goulotte d'évacuation (2a), et sert à arrêter un gobelet (1) dans sa glissade vers le bas ; dans sa position d'arrêt, située à l'intérieur de la goulotte (2a),le moyen (8)forme support pour la partie inférieure ou fond du gobelet (1) (conférer figure 3b), comme le montrera le fonctionnement décrit ci-après.

Le moyen (8) est une pièce en fil métallique conformée en épingle à cheveux, comportant deux parties à angles droits, d'une part un doigt d'arrêt (15b), pénétrant en un point intermédiaire de la goulotte (2a), dans la position d'arrêt du moyen (8), et d'autre part un balancier (15a), incliné vers le bas, monté sur un axe (16), lequel est tourillonné au niveau haut de la goulotte (2a), sur les deux parois de cette dernière respectivement. Cet axe (16) comporte, à l'extérieur de la goulotte (2a), et du côté du bras de renvoi (14) décrit précédemment, un bras d'actionnement (17), orienté à l'opposé du balancier (15a). Ce bras d'actionnement (17) est donc en vis-à-vis avec le bras de renvoi (14).

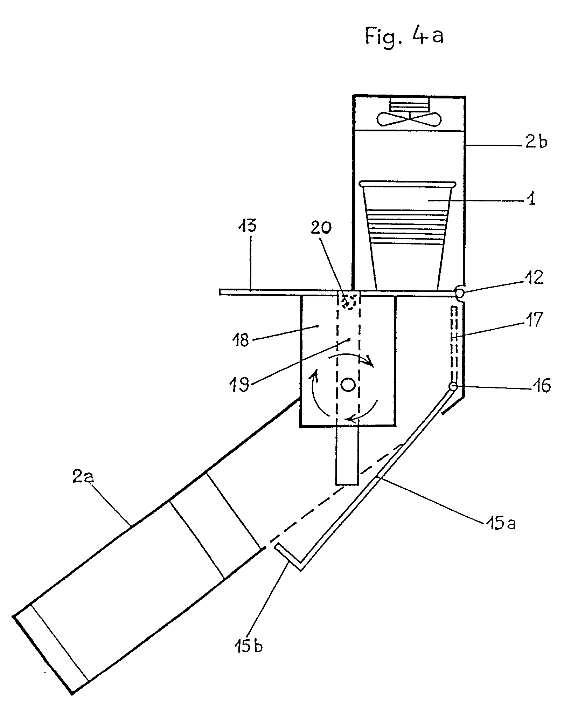

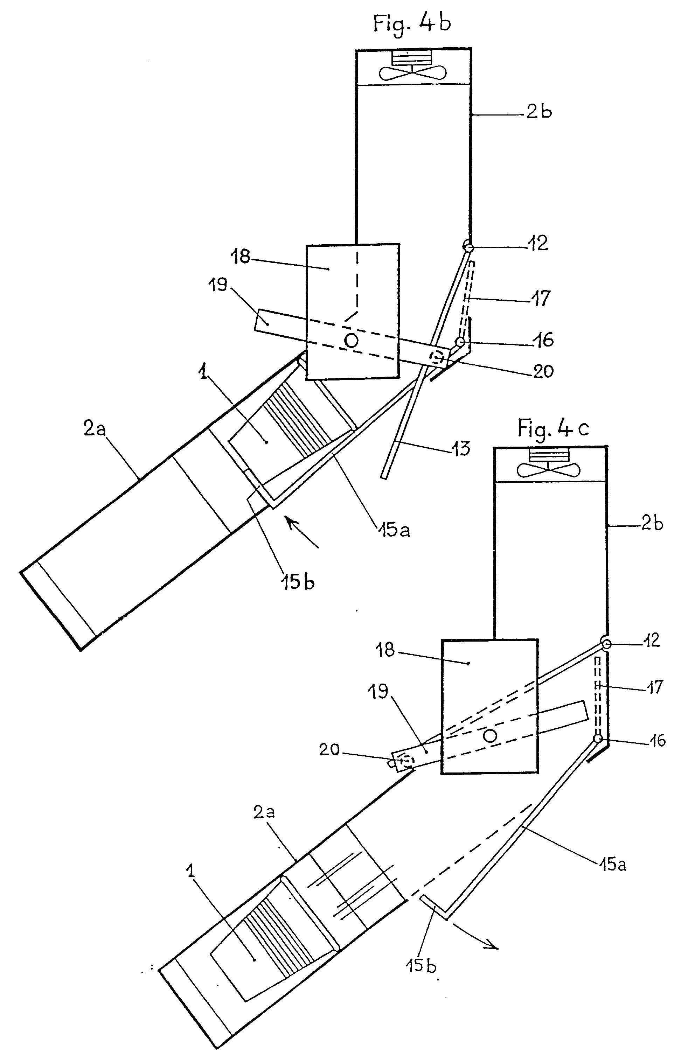

Grâce à la manivelle (19),équipée d'un maneton (20), visible aux figures 4a à 4c, la trappe (4) et le doigt d'arrêt (15b) sont actionnés par un seul et même moyen, en l'occurence le moteur électrique (18).

Si l'on considère la position initiale représentée aux figures 3a et 4a, dans laquelle le volet ou trappe (4) est en position horizontale, le volet (3) étant verrouillé en position fermée, la manivelle (19) est en position verticale, et le maneton (20) supporte le levier d'actionnement (13). A partir de cette position,par rotation de la manivelle (19) dans le sens des aiguilles d'une montre (cf fig. 4a), le levier (13) échappe au maneton (20) et bascule par gravité vers le bas. Dès cet instant, le volet (4) bascule lui-aussi vers le bas, libérant le gobelet (1) vers la goulotte (2a), tandis que le bras de renvoi (14) vient au contact du bras d'actionnement (17), et le repousse vers l'extérieur de l'appareil ; ainsi, simultanément, le doigt (15b) pénètre dans la goulotte (2a), et vient dans la position représentée aux figures 3b et 4b. Par poursuite de la rotation, le maneton (20) passe au dessous du levier (13), pour relever ce dernier, conformément à la figure 4c. Le volet (4) revient alors à la position représentée aux figures 3a et 4a, tandis que le bras de renvoi (14) libère le bras d'actionnement (17), de telle sorte que le balancier (15a) avec le doigt (15b) s'escamote par gravité de la goulotte d'évacuation (2a), ce qui permet d'évacuer le gobelet vers l'extrémité inférieure de la goulotte (2a), conformément à la figure 4c.

Conformément aux figures 3b et 10, le dispositif de reconnaissance optique comprend, outre le support amovible (8) décrit précédemment, un système optique constitué par un capteur (21) et un boîtier de controle (22).

Le capteur (21) est réglé en hauteur, le long de la branche (2a) du conduit (2), à une distance prédéterminée par rapport au support (8), et plus précisément par rapport à la position d'arrêt du doigt (15b). Cette distance correspond sensiblement à la hauteur du bourrelet annulaire (1a) de chaque gobelet (1) par rapport au fond de ce dernier. Le capteur (21) comporte deux ménisques optiques (23a) et (24a), appartenant aux deux fibres optiques (23) et (24) respectivement ; le ménisque (23a) dirige un faisceau lumineux incident oblique, par rapport à la direction normale au rebord (la), et le ménisque (24a) reçoit le faisceau lumineux réfléchi par le même rebord (1a), toujours oblique par rapport à la même direction normale. Les faisceaux lumineux, incident et réfléchi, déterminent entre eux un plan situé par rapport au support (8), à la même distance que le capteur (21).

Les fibres optiques (23) et (24) relient le capteur (21), respectivement à une source lumineuse (70) et à une cellule photo-électrique (71), appartenant au boîtier (22). Le signal électrique de la cellule (71) est repris par un potentiomètre (72), lequel appartient au boîtier (22) également. Ce potentiomètre permet de délivrer un signal de sortie, au-delà d'un seuil d'intensité réglable du faisceau lumineux réfléchi.

Compte tenu de la description précédente, et après un réglage approprié du potentiomètre (72), on obtient un signal de sortie (73), uniquement en présence du rebord (1a) en face du capteur (21), c'est-à-dire grosso-modo dans le plan des faisceaux lumineux incident (23a) et réfléchi (24a).

Un ventilateur est disposé au-dessus du sas (5), pour délivrer un courant d'air dans le conduit (2) de circulation, constitué par le sas (5) avec la trappe (4) escamotée et la goulotte d'évacuation (2a). Ce courant d'air facilite la descente des gobelets (1) dans la goulotte (2a).

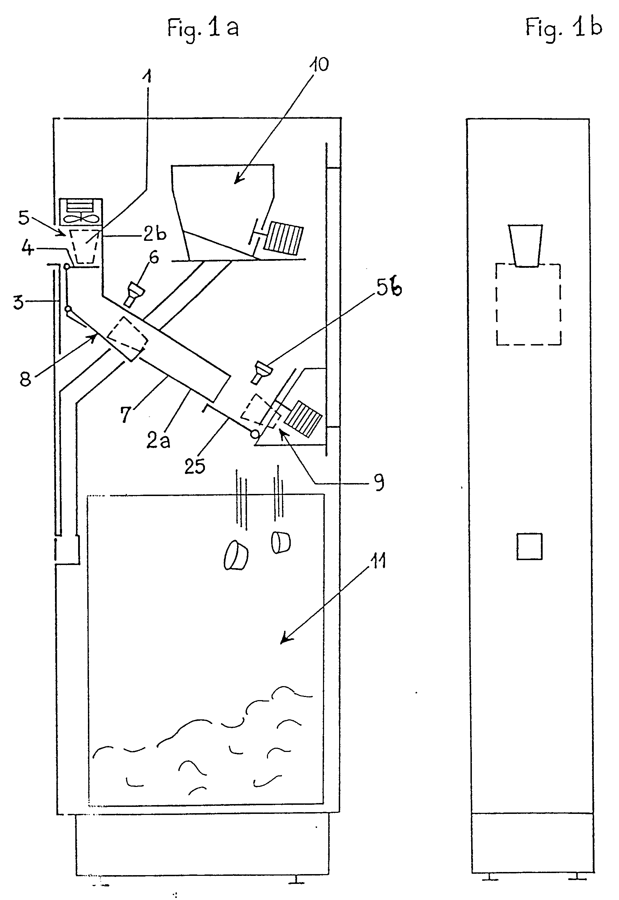

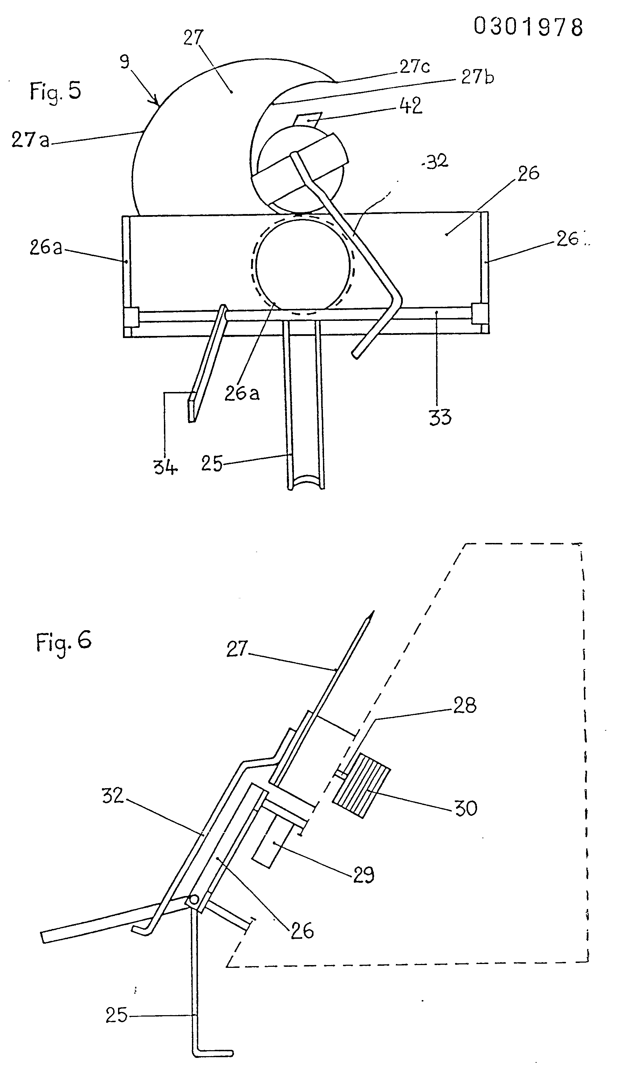

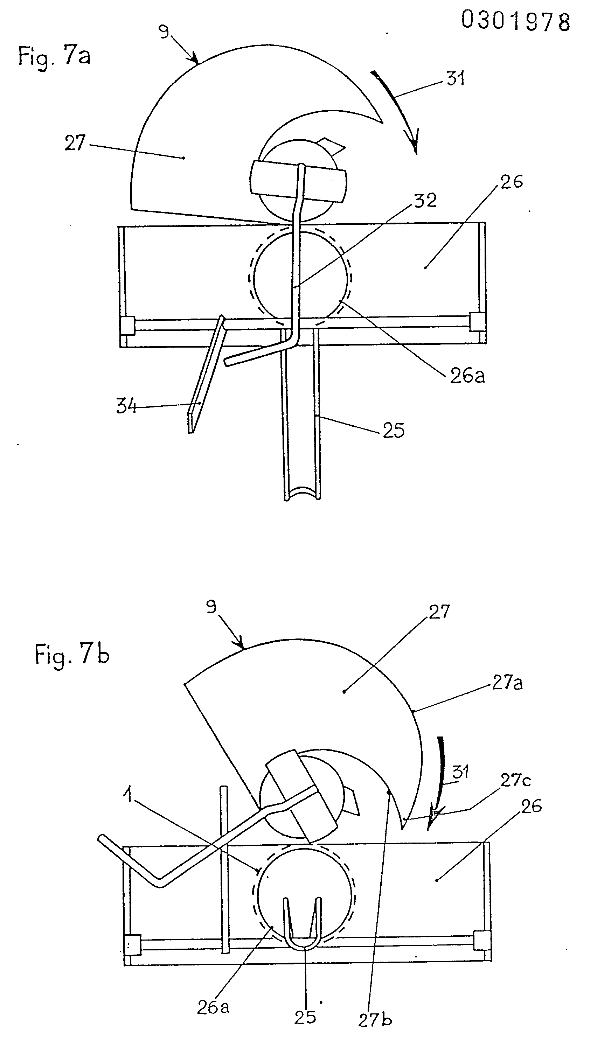

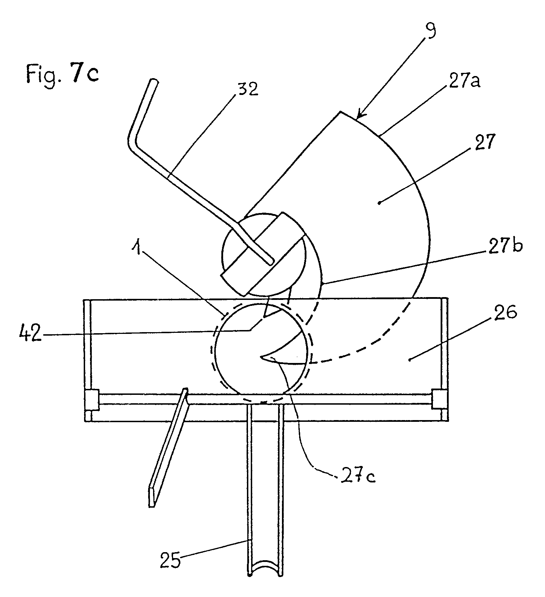

Conformément à la figure 1a, le dispositif de destruction (9) d'un gobelet reconnu conforme au moyen du système optique (6) décrit précédemment est disposé dans le prolongement de la goulotte (2a), du côté de l'extrémité basse de cette dernière, elle même opposée au sas (5), mais à distance de ladite extrémité. Un guide escamotable (25), incliné vers le bas et prolongeant dans la même direction la goulotte (2a), relie l'extrémité basse de la goulotte (2a) et le dispositif de destruction (9). Comme le montrera le fonctionnement du dispositif (9), décrit par référence aux figures 7a à 7c, ce dernier entraine le guide escamotable (25), de sa position escamotée et verticale représentée à la figure 6, à sa position active, représentée à la figure 7b, reliant (comme montré par la figure 1a) l'extrémité basse de la goulotte (2a) et le dispositif de destruction (9).

Comme le montre la figure 1a, un détecteur (56), par exemple une cellule photo-électrique, est disposé dans l'intervalle situé entre l'extrémité basse de la goulotte (2a) et le dispositif de destruction (9). Cette cellule permet de mettre en route le dispositif (10), pour rendre des pièces de monnaie, à la condition que le passage d'un gobelet ait été détecté dans l'intervalle précité.

Le dispositif de destruction conforme aux figures 5 et 6, est disposé de manière générale perpendiculairement par rapport à la direction de la goulotte d'évacuation (2a), ce qui revient à dire que ce dispositif est disposé de manière oblique par rapport à l'horizontale.

Ce dispositif comprend :

- une plaque (26) disposée perpendiculairement par rapport à la direction précitée, comportant un orifice de découpe (26a), de forme circulaire adaptée à la section transversale médiane du gobelet à détruire ; un moyen de calage (29), permettant de fixer en position le gobelet (1), est éventuellement prévu au-dessous de la plaque (26), en correspondance avec l'orifice (26a) ;

- une lame (27) de découpe, montée perpendiculairement sur un axe de rotation (28), lui-même entrainé par un moteur (30) ; cet axe (28) est situé à distance de l'orifice de découpe (26a) ; la lame (27) est disposée parallèlement et au-dessous de la plaque (26), soit perpendiculairement par rapport à la direction de la goulotte (2a), et elle présente deux bords coupants (27a) et (27b), l'un convexe (27a) et l'autre concave (27b), divergeant l'un par rapport à l'autre, à partir d'une pointe de perforation (27c) du gobelet (1), dans le sens inverse à la rotation (31) de la lame ;

- une lame auxiliaire (42), ayant une pointe dirigée dans le même sens que la pointe de perforation (27c) de la lame principale (27), disposée en avant de cette dernière, par rapport au rayon passant par l'axe de la lame principale et la pointe précitée (27c), dans le sens de la rotation de cette même lame (27) ;

- un bras d'éjection (32), monté perpendiculairement au dos de la lame (27), solidaire de l'axe de rotation (28), de l'autre côté de la plaque (26), par rapport à la lame (27) ;

- Le bras (25) solidaire et perpendiculaire d'un axe (33), lui même tourillonné sur deux rebords (26a) et (26b) de la plaque (26) ; cet axe (33) porte un doigt de relevage (34) dont le fonctionnement sera décrit ci-après.

Conformément aux figures 7a à 7c, le fonctionnement du dispositif de destruction est le suivant :

- en partant de la position active représentée à la figure 7a, par rotation de l'axe (28) dans le sens (31), l'extrémité recourbée du bord (32) vient au contact du doigt (34), et relève ce dernier, de telle manière que le guide (25) se relève lui aussi de sa position verticale, à sa position active représentée plus particulièrement à la figure 1a, laquelle établit une continuité de circulation du gobelet entre la goulotte d'évacuation (2a),et l'orifice de découpe (26a), en correspondance avec la sortie inférieure du conduit (2a) ;

- dès ce moment, un gobelet peut venir se loger, par glissade et par gravité, dans l'orifice (26a), conformément à la figure 7b ;

- puis, conformément à la figure 7c, la lame auxiliaire (42) puis la pointe perforatrice (27c) pénètrent dans le gobelet (1), perpendiculairement à son axe, dans un plan médian, et les côtés tranchants (27a) et (27b) poursuivent la découpe de la paroi du gobelet (1), jusqu'à obtenir une séparation complète de ce dernier en une moitié située au-dessus de la plaque (26) et une autre moitié située au-dessous de la même plaque ;

- le bras (32) vient ensuite éjecter, si besoin en est, la moitié supérieure découpée, les deux moitiés tombant dans la poubelle (11), conformément à la représentation de la figure 1a.

Un appareil tel que précédemment décrit peut être commandé et controlé par tout moyen approprié, de type électrique, électronique, pneumatique, au moyen d'un programmateur , ou d'un microprocesseur, dès lors que tous ces systèmes permettent de séquencer les étapes suivantes :

a) on introduit un gobelet usagé dans le sas (5), puis on referme la porte (3) ;

b) dès ce moment, comme décrit par référence aux figures 3a et 3b, et 4a à 4c, la trappe 4 s'escamotte vers le bas ; le gobelet glisse par gravité dans la goulotte (2a), puis il est arrêté par le moyen (8) pour un controle de conformité au moyen du système optique (6) ;

c) le gobelet est ensuite libéré, par rapport au moyen d'arrêt (8) et poursuit sa chute vers l'extrémité inférieure de la goulotte (2a) ;

d) si le gobelet a été reconnu conforme par le système (22), alors le dispositif de destruction (9) se met en route,pour relever en particulier le guide (25) ; simultanément, et toujours dans le cas de la reconnaissance d'un gobelet conforme, le dispositif (10) pour rendre la monnaie est mis en route, à la condition que la cellule (56) ait détecté le passage du même gobelet dans l'interstice compris entre la goulotte (2a) et le dispositif (9) ;

e) si le gobelet n'est pas reconnu conforme,alors, à sa sortie de la goulotte (2a), il sera évacué directement dans la poubelle (11), le guide (25) n'étant pas relevé à sa position représentée à la figure la, compte tenu du non fonctionnement dans ce cas du dispositif de destruction (9).

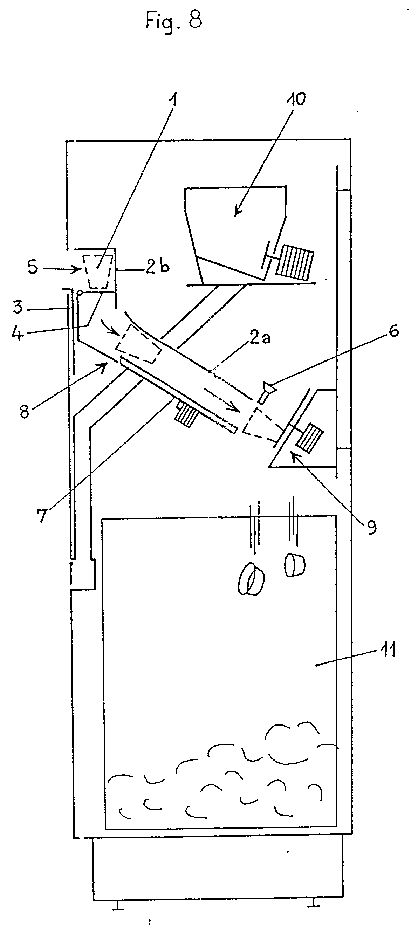

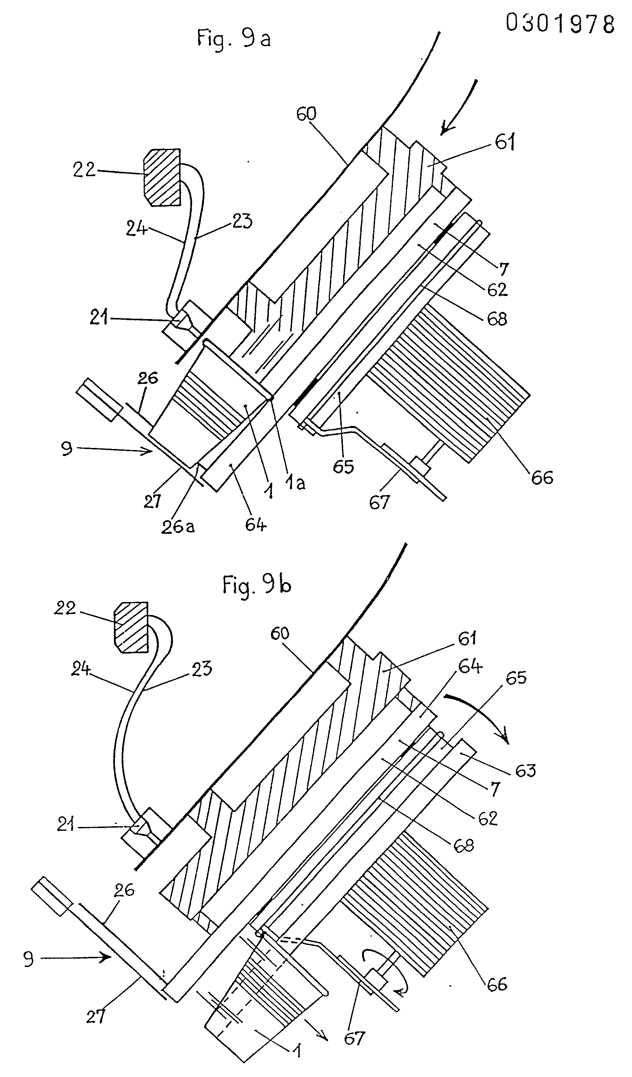

Le mode d'exécution conforme aux figures 8 et 9 correspond à une réalisation simplifiée du mode d'exécution décrit précédemment. Les références numériques communes aux figures 1 à 7 d'une part et 8 et 9 d'autre part désignent des éléments ou composants ayant les mêmes fonctions que celles décrites précédemment.

Conformément aux figures 9 et 10, la réalisation représentée diffère de celle décrite précédemment, essentiellement par les caractéristiques techniques suivantes.

Le dispositif de destruction (9), dans sa position d'arrêt dans laquelle la lame (27) obture complètement l'orifice (26a) (conférer fig. 7a), forme directement un support pour la partie inférieure du gobelet (1), de manière à controler la conformité géométrique dudit gobelet introduit dans l'appareil. En d'autres termes, à partir du sas (5), par escamotage de la trappe (4), le gobelet glisse directement vers le dispositif (9). Et l'orifice (26a) reçoit la partie inférieure du gobelet, tandis que la lame (27) arrête sa glissade vers le bas.

En conséquence, le capteur(21) d'émission et réflexion d'un faisceau lumineux est disposé au bas de la rampe (7), à une distance prédéterminée de la lame (27) (selon la direction de la rampe 7), correspondant à la hauteur du rebord (la) par rapport au fond du gobelet (1).

La rampe de circulation du gobelet comporte, d'une part une partie fixe constituée par un guide supérieur (60) et deux guides latéraux (61) allégés, et d'autre part une partie mobile (62) constituée par deux tubes (63) et (64) parallèles,solidaires d'un support (65). Selon la direction de la rampe (7), la partie mobile (62) ainsi agencée s'étend jusqu'au niveau de la plaque 26) du dispositif de destruction (9).

Conformément aux figures 9a et 9b, la partie mobile (62) est susceptible d'être escamotée vers le bas (conférer fig. 9a) grâce à un moteur (66) actionnant une biellette (67) tourillonnée sur un axe (68) monté sur le support (65).

S'agissant du dispositif de destruction (9), on notera qu'en conséquence le bras d'éjection (32) ainsi que le guide (25) avec son doigt (34) ont été supprimés.

La cellule photo-électrique (56) a été supprimée.

Le fonctionnement d'un dispositif ainsi modifié demeure identique à celui décrit par référence aux figures 1 à 7 ; seules les différences ci-après doivent être notées :

- le dispositif de destruction (9) n'est mis en route que si un gobelet a été reconnu conforme par le dispositif optique (22), auquel cas la lame (27) dégage l'orifice (26a) de la plaque (26), en permettant l'introduction dans ce dernier du gobelet traité, puis la découpe dudit gobelet par poursuite de la rotation de la lame ;

- au cas où le gobelet n'est pas conforme, l'escamotage de la partie mobile (62) de la rampe (7), par actionnement du moteur (66), permet d'évacuer celui-ci directement vers le sac-poubelle (11).

La présente invention peut s'appliquer à tout autre secteur technique que celui des gobelets plastiques ; par exemple on peut envisager une application des mêmes principes pour récupérer des bouteilles consignées, et rendre à l'utilisateur une pièce de monnaie ou de l'argent représentant cette consigne.

**Revendications**

1/ Appareil pour récupérer un objet (1) contre la délivrance d'un support de contre-valeur, ledit objet ayant substantiellement une forme de révolution autour d'un axe et comportant une zone annulaire de référence (1a), située entre les deux extrémités selon l'axe dudit objet, présentant un facteur de réflexion différent de celui du corps dudit objet, ledit appareil comprenant un sas (5) avec porte (3) d'accès verrouillable pour l'introduction de l'objet par l'utilisateur, un dispositif (6) de reconnaissance de la conformité de l'objet, un moyen (2a) d'évacuation de l'objet reconnu conforme, un dispositif (10) de délivrance du support de contre-valeur, un récipient (11) pour collecter les objets introduits dans l'appareil, caractérisé en ce que le dispositif (6) de reconnaissance comprend :

a) un support amovible (8) pour arrêter l'objet (1) par l'une de ses extrémités selon l'axe ;

b) un système optique comportant, d'une part une source lumineuse (70) pour l'émission d'un faisceau lumineux incident, sur la zone annulaire (1a) de référence, et d'autre part une cellule (71) photo-électrique pour la réception du faisceau lumineux réfléchi par la même zone annulaire de référence, les faisceaux incident et réfléchi étant réglés en hauteur pour déterminer ensemble un plan de réflexion situé à une distance prédéterminée par rapport audit support (8), sensiblement égale à la hauteur de la zone annulaire par rapport à l'extrémité de l'objet arrêtée par le support ;

c) des moyens (72) de controle associés à la cellule photo-électrique, délivrant un signal de sortie (73), au-delà d'un seuil d'intensité du faisceau lumineux réfléchi, correspondant à la réflexion du faisceau incident sur la zone annulaire de référence.

2/ Appareil selon la revendication 1, caractérisé en ce que, d'une part le sas (5) comporte une trappe (4) escamotable sur laquelle est déposé l'objet (1) introduit, ouvrant sur une rampe (2a) d'évacuation inclinée vers le récipient (11), et d'autre part un moyen d'arrêt (8) escamotable de l'objet glissant dans la rampe vers le bas, formant dans sa position d'arrêt (cf fig. 3b) support pour la partie inférieure du gobelet, est prévu au-dessous de la trappe (4).

3/ Appareil selon la revendication 2, caractérisé en ce que le moyen (8) d'arrêt escamotable est un doigt d'arrêt (15b) de l'objet glissant vers le bas, disposé en un point intermédiaire de la rampe (2a).

4/ Appareil selon la revendication 1, caractérisé en ce qu'un dispositif de destruction (9) de l'objet reconnu conforme est disposé dans le prolongement de la rampe (2a), du côté de l'extrémité basse de cette dernière, opposée au sas (5).

5/ Appareil selon la revendication 1, caractérisé en ce que le dispositif de destruction (9) est disposé à distance de l'extrémité basse de la rampe (2a), et un guide escamotable (25), incliné vers le bas, et prolongeant la rampe (2a), relie l'extrémité basse de ladite rampe (2a) et le dispositif de destruction (9).

6/ Appareil selon la revendication 5, caractérisé en ce que le dispositif de destruction (9) actionne le guide escamotable (25) de sa position escamotée à sa position active, reliant l'extrémité basse de la rampe au dispositif de destruction.

7/ Appareil selon la revendication 5, caractérisé en ce qu'un détecteur (26) de l'objet en déplacement est disposé dans l'intervalle entre l'extrémité basse de la rampe (2a) et le dispositif de destruction (9).

8/ Appareil selon la revendication 4, caractérisé en ce que le dispositif de destruction (9), dans sa position d'arrêt, forme support pour la partie inférieure du gobelet.

9/ Appareil selon la revendication 8, caractérisé en ce que la rampe (7a) est escamotable vers le récipient (11).

10/ Appareil pour récupérer un objet creux (1) présentant une paroi souple, par exemple un gobelet en matière plastique, contre la délivrance d'un support de contre-valeur, comprenant un sas (5) avec porte (3) d'accès verrouillable pour l'introduction de l'objet par l'utilisateur, un dispositif (6) de reconnaissance de la conformité de l'objet, un moyen (2a) d'évacuation de l'objet reconnu conforme, un dispositif (10) de délivrance du support de contre-valeur, un dispositif de destruction (9) de l'objet reconnu conforme, caractérisé en ce que le dispositif comprend :

- une plaque (26) comportant un orifice de découpe (26a) adapté à la section de l'objet creux, avec éventuellement un moyen de calage (29) dudit objet dans ledit orifice ;

- une lame (27) de découpe montée perpendiculairement sur un axe de rotation (28) situé à distance de l'orifice de découpe, ladite lame s'étendant parallèlement à la plaque, et présentant deux bords coupants (27a) et (27b), l'un convexe (27a) et l'autre concave (27b), divergeant l'un par rapport à l'autre, à partir d'une pointe de perforation de l'objet, dans le sens inverse à la rotation de la lame.

11/ Appareil selon la revendication 10, caractérisé en ce qu'une lame auxiliaire (42), ayant une pointe dirigée dans le même sens que la pointe de perforation (27c) de la lame principale (27), est disposée en avant de cette dernière, par rapport au rayon passant par l'axe de la lame principale et la pointe de perforation, dans le sens de rotation de ladite lame principale.

Fig. 1a

Fig. 1b

Fig. 2

0301978

Fig. 3 a

0301978

Fig. 3b

0301978

Fig. 4a

0301978

Fig. 4b

Fig. 4c

Fig. 5

Fig. 6

0301978

Fig. 7a

Fig. 7b

Fig. 7c

0301978

Fig. 8                    0301978

Fig. 9a

Fig. 9b

0301978

FIG.10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D | FR-A-2 580 418 (MULLER) <br> * Résumé; figures; revendications * | 1 | G 07 F 7/06 |
| Y,A | | 4,7-10 | |
| | --- | | |
| Y | PATENT ABSTRACTS OF JAPAN, vol. 1, no. 58, 6 juin 1977, page 3 E 77; & JP-A-52 498 (KOSHIRO SANSA) 05-01-1977 <br> * Résumé * | 1 | |
| A | Idem | 2,3 | |
| | --- | | |
| A | US-A-4 141 493 (E.A. ARP) <br> * Résumé; colonne 2, ligne 5 - colonne 3, ligne 12; colonne 9, ligne 63 - colonne 10, ligne 6 * | 1 | |
| | --- | | |
| A | US-A-4 245 731 (R.J. HERBST) <br> * Résumé; figures; colonne 5, ligne 5 - colonne 6, ligne 42 * | 1-11 | |
| | --- | | |
| A | US-A-4 316 533 (R.D. HUGHES) | | |
| | --- | | DOMAINES TECHNIQUES RECHERCHES (Int. Cl.4) |
| A | US-A-3 800 941 (J.L. POWELL) | | |
| | --- | | G 07 F |
| A | FR-A-2 332 518 (THE MEAD CORP.) | | B 07 C |
| | ----- | | |

Le présent rapport a été établi pour toutes les revendications

| Lieu de la recherche | Date d'achèvement de la recherche | Examinateur |
|---|---|---|
| LA HAYE | 20-10-1988 | DAVID J.Y.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)